# EUROPEAN PATENT APPLICATION

(11) **EP 3 779 821 A1**
(43) Date of publication of application: **17.02.2021**
(21) Application number: 19785734.5
(22) Date of filing: 18.03.2019
(51) Int. Cl.: G06Q 20/06

(54) **VIRTUAL CURRENCY MANAGEMENT SYSTEM AND VIRTUAL CURRENCY MANAGEMENT PROGRAM**

(30) Priority: 10.04.2018 JP 2018075225
(71) Applicant: Matsuda, Yoshinari, Tokyo 100-6326 (JP)
(72) Inventor: Matsuda, Yoshinari, Tokyo 100-6326 (JP)
(74) Representative: Murgitroyd & Company
(86) International application number: PCT/JP2019/011036
(87) International publication number: WO 2019/198427

(57) **Abstract**

Provided are a virtual currency management method and a virtual currency management program which increase desirability of investment for investors.

A virtual currency management method for managing a virtual currency using a distributed ledger technology in which transactions of the virtual currency are managed using a plurality of terminal devices in a distributed manner. The virtual currency management method includes a virtual currency issuing step of issuing the virtual currency, a virtual currency transacting step of transacting the virtual currency issued in the virtual currency issuing step, a transaction storing step of causing the plurality of terminal devices to store the transactions of the virtual currency in the virtual currency transacting step, and a conversion executing step of executing conversion from the virtual currency to valuable securities.

## Description

### [Technical Field]

The present invention relates to a virtual currency management system and a virtual currency management program.

### [Background Art]

Recently, virtual currencies represented by Bitcoin (registered trademark) have come into circulation and are beginning to be utilized for various kinds of transactions. Non-Patent Literature 1 discloses the specifications of Bitcoin. Initial coin offerings (ICO) are known as one of the fields in which virtual currencies are utilized. An ICO is used as means for raising funds by an entrepreneur or the like. In the related art, in an ICO, investors invest in a fund-raiser by purchasing tokens issued by the fund-raiser using a virtual currency, such as Bitcoin or Ethereum. These tokens are also a kind of virtual currency.

Investors make an investment with the expectation of a rise in market value of the tokens according to an increase in marketability due to public offerings of the purchased tokens or success in investment target businesses. In addition, fund-raisers may attempt to increase desirability of investment for investors and to increase the amount of fund-raising by providing token purchasers with benefits.

### [Citation List]

### [Non-Patent Literature]

### [Non-Patent Literature 1]

"Bitcoin: A Peer-to-Peer Electronic Cash System", [accessed on March 27, 2018, Internet <URL: https://bitcoin.org/bitcoin.pdf>

### [Summary of Invention]

### [Technical Problem]

However, some fund-raisers are unreliable due to the reason of not starting an investment target business or the like, and it is difficult to identify them. Since an investment involves high risk, there is a problem that investors become reluctant to make an investment.

An object of the present invention is to provide a virtual currency management method and a virtual currency management program which increase desirability of investment for investors.

### [Solution to Problem]

According to the present invention, there is provided a virtual currency management method for managing a virtual currency using a distributed ledger technology in which transactions of the virtual currency are managed using a plurality of terminal devices in a distributed manner. The virtual currency management method includes a virtual currency issuing step of issuing the virtual currency, a virtual currency transacting step of transacting the virtual currency issued in the virtual currency issuing step, a transaction storing step of causing the plurality of terminal devices to store the transactions of the virtual currency in the virtual currency transacting step, and a conversion executing step of executing conversion from the virtual currency to valuable securities.

### [Advantageous Effects of Invention]

According to the present invention, it is possible to provide a virtual currency management method and a virtual currency management program which increase desirability of investment for investors.

### [Brief Description of Drawings]

Fig. 1 is a block diagram showing a configuration of a virtual currency management system executing a virtual currency management method and a virtual currency management program according to a first embodiment of the present invention.
Fig. 2 is a block diagram showing a configuration of each terminal device shown in Fig. 1.
Fig. 3 is a block diagram showing a configuration of a storage unit 14 shown in Fig. 2.
Fig. 4 is a block diagram showing a structure of a block chain 141 of a virtual currency storage unit 140.
Fig. 5 is a block diagram showing a structure of a transaction stored in a transaction pool 142 of the virtual currency storage unit 140.
Fig. 6 is a block diagram showing a structure of an UTXO stored in a UTXO pool 143 of the virtual currency storage unit 140.
Fig. 7 is a flowchart showing operation of the virtual currency management system 100 shown in Fig. 1.
Fig. 8 is a flowchart showing operation of the virtual currency management system 100 shown in Fig. 1.
Fig. 9 is a flowchart showing operation of the virtual currency management system 100 according to a second embodiment of the present invention.

### [Description of Embodiments]

Hereinafter, embodiments of a virtual currency management method and a virtual currency management program according to the present invention will be described with reference to the drawings.

### [First embodiment]

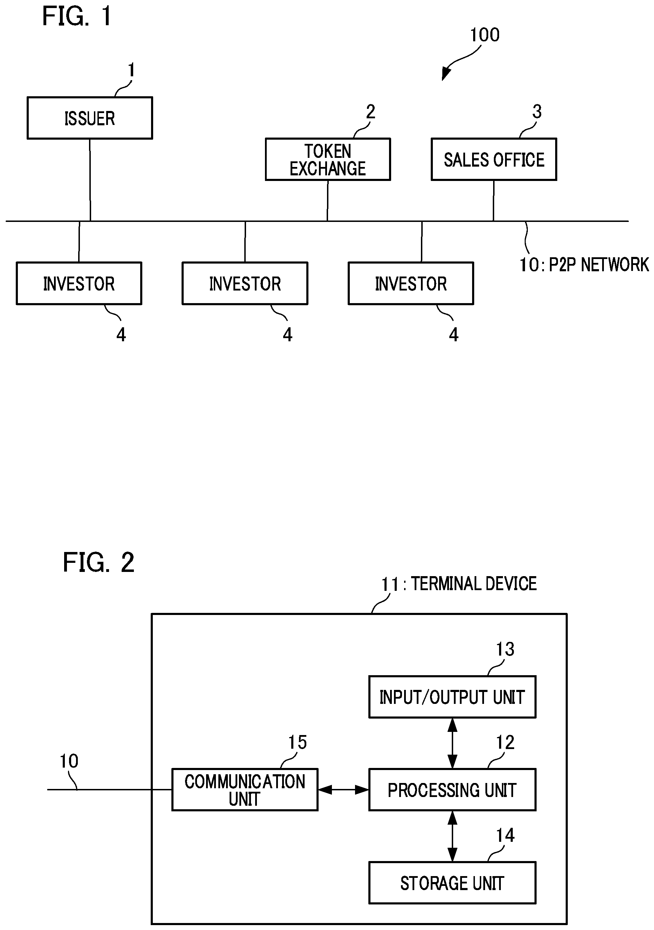

Fig. 1 is a block diagram showing a configuration of a virtual currency management system executing a virtual currency management method and a virtual currency management program according to a first embodiment of the present invention. A virtual currency management system 100 of the present embodiment is configured to include an issuer terminal device 1 serving as a terminal device of an issuer issuing tokens related to an ICO, an exchange terminal device 2 serving as a terminal device of a token exchange mediating transactions of tokens, a sales office terminal device 3 serving as a terminal device of a sales office itself dealing in tokens, and an investor terminal device 4 serving as a terminal device of an investor purchasing tokens, which are connected to each other via a P2P network 10. The virtual currency management system 100 may be established utilizing a platform of an existing virtual currency such as Bitcoin, Ethereum, or XEM or may be established using a different platform. For example, when Ethereum is utilized, first, it is necessary to participate in a P2P network for Ethereum. Participation in the P2P network for Ethereum is performed by installing and starting an Ethereum client in a terminal device. In the present embodiment, tokens related to an ICO will also be referred to as virtual currencies.

A plurality of terminal devices other than those shown in the diagrams are connected to the P2P network 10 of the virtual currency management system 100. In the virtual currency management system 100, there is one issuer terminal device 1, but there may be a plurality of terminal devices of other kinds. Each of the issuer terminal device 1, the exchange terminal device 2, the sales office terminal device 3, and the investor terminal device 4 may have both a function of a miner mining a virtual currency and a function of a wallet or may have either one of these functions. In addition, each of the issuer terminal device 1, the exchange terminal device 2, the sales office terminal device 3, and the investor terminal device 4 may be based upon a full node or may be based upon a simplified payment verification (SPV) node. In addition, when each of the issuer terminal device 1, the exchange terminal device 2, the sales office terminal device 3, and the investor terminal device 4 is based upon a full node, the node may be an archive node or may be a pruning node. The virtual currency management system 100 includes a cold wallet (not shown in the diagram) which is not connected to the P2P network 10. For example, a cold wallet includes a public key or a secret key printed on paper, and a dedicated terminal device which is not connected to a network.

Fig. 2 is a block diagram showing a configuration of each terminal device shown in Fig. 1. In Fig. 2, the configuration of each of the issuer terminal device 1, the exchange terminal device 2, the sales office terminal device 3, and the investor terminal device 4 shown in Fig. 1 is shown as a configuration of a terminal device 11. The terminal device 11 applies to any or all of the issuer terminal device 1, the exchange terminal device 2, the sales office terminal device 3, and the investor terminal device 4. The issuer terminal device 1, the exchange terminal device 2, the sales office terminal device 3, and the investor terminal device 4 may have the same configuration, or the terminal devices may individually have a configuration different from those of other terminal devices.

The terminal device 11 is configured to have a processing unit 12 performing various kinds of processing, an input/output unit 13 performing inputting and outputting with respect to an operator, a storage unit 14 storing various kinds of data, and a communication unit 15 performing communication via the P2P network 10. The terminal device 11 is a computer. The terminal device 11 may be a device which is generally referred to as a personal computer or may be a device which is referred to as a supercomputer. In addition, the terminal device 11 may be a device which is referred to as a smartphone or a tablet. The processing unit 12 is a computing device which is referred to as a CPU or an MPU. The processing unit 12 executes a program stored in the storage unit 14. The input/output unit 13 is an input/output device such as a keyboard, a mouse, or a display. The storage unit 14 may be a RAM or a ROM. Moreover, the storage unit 14 may be any existing storage device such as a magnetic storage device or an optical storage device.

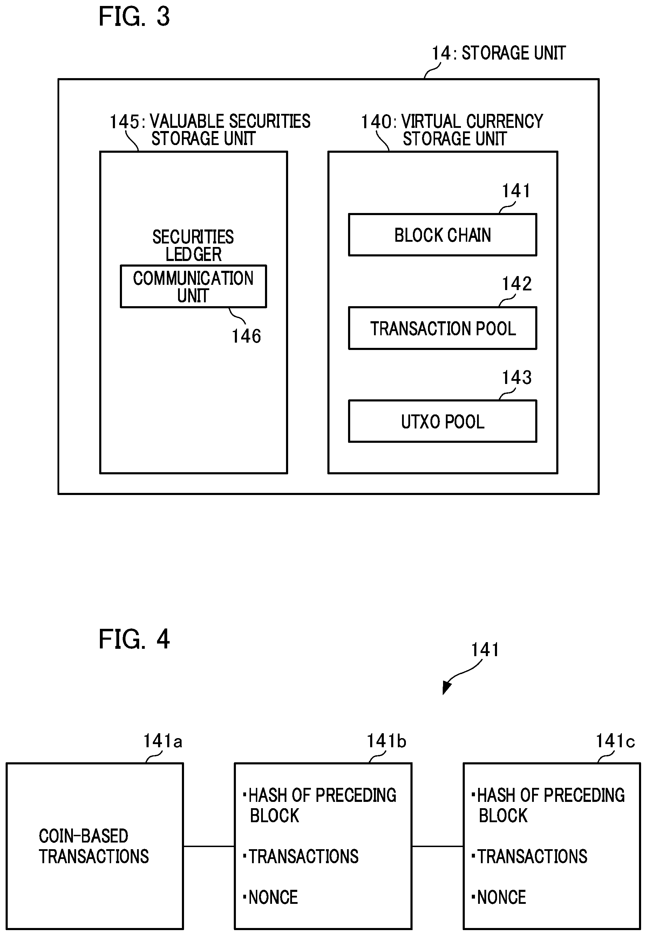

Fig. 3 is a block diagram showing a configuration of the storage unit 14 shown in Fig. 2. The storage unit 14 has a virtual currency storage unit 140 storing data related to virtual currencies and a valuable securities storage unit 145 storing data related to valuable securities. An issuer utilizes an ICO in order to raise funds necessary to carry out a project of itself. The issuer issues tokens (virtual currencies) through an ICO. Investors make an investment with respect to the project of the issuer by purchasing the tokens issued by the issuer. The virtual currency storage unit 140 stores information related to the tokens issued by the issuer. In the present embodiment, the issuer converts the issued tokens into valuable securities at a predetermined time. The valuable securities storage unit 145 stores information related to these valuable securities.

In the present embodiment, in an ICO launched by an issuer, transactions of tokens having improved authenticity are provided using a distributed ledger technology, that is, using a mechanism in which information is shared by a plurality of terminal devices connected to the P2P network 10. The virtual currency storage unit 140 has a block chain 141 storing data related to transactions of tokens in the past, a transaction pool 142 storing transactions of tokens, and a UTXO pool 143 storing unspent transaction outputs (UTXOs). The valuable securities storage unit 145 has a securities ledger 146 storing an account number of an account in which converted valuable securities are deposited when tokens purchased by an investor are converted into valuable securities at a predetermined time. The valuable securities storage unit 145 may realize a distributed ledger technology by being provided in a plurality of terminal devices connected to the P2P network 10. In addition, the valuable securities storage unit 145 may be exempt from a distributed ledger technology and may be provided in only the issuer terminal device 1. The valuable securities storage unit 145 may be provided in the issuer terminal device 1 and the investor terminal device 4 of an investor who has converted tokens into valuable securities.

Fig. 4 is a block diagram showing a structure of the block chain 141 of the virtual currency storage unit 140. The block chain 141 stores blocks indicating all the transactions in the past. In the example shown in Fig. 4, the block chain 141 stores blocks 141a, 141b, and 141c. The block 141a is a first block, which is a block related to coin-based transactions. The time when tokens issued by an issuer are delivered to an investor who has purchased the tokens for the first time is a first transaction, and this transaction is a coin-based transaction. The block chain 141 begins from the block 141a related to coin-based transactions.

Subsequent to the block 141a, the block 141b is interlinked therewith. The block 141b includes a hash which is a value obtained by executing a hash function while having the preceding block as a key, transactions which are transaction data, and a nonce. A miner performs authentication of some transactions of the transactions stored in the transaction pool 142 and collects the authenticated transactions as transactions to be stored in the block 141b. In addition, the miner finds a nonce in which the hash of the block 141b has a predetermined value (for example, a value of which a first few digits are 0) and interlinks the block 141b storing the found nonce with the block 141a.

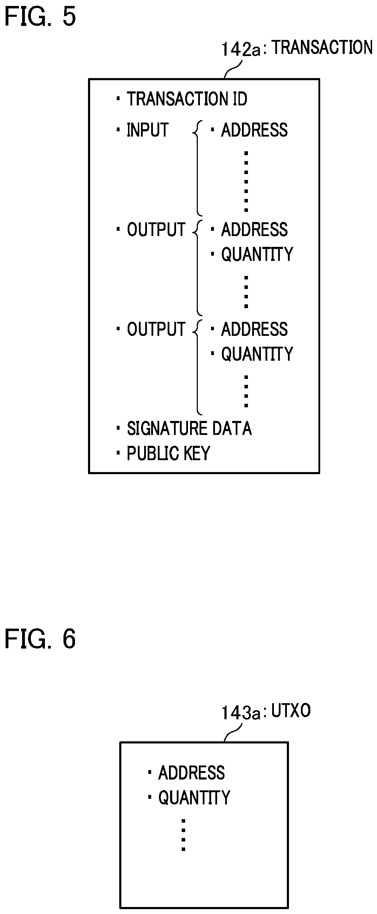

Fig. 5 is a block diagram showing a structure of a transaction stored in the transaction pool 142 of the virtual currency storage unit 140. A transaction 142a of the transaction pool 142 includes a transaction ID used for identifying this transaction, an input including an address of a transfer origin of tokens related to the transaction, an output including an address of a transfer destination of the tokens related to the transaction, signature data signed with a secret key to the transfer origin of the tokens, and a public key to the transfer origin of the tokens. An input of the transaction 142a includes scripts related to various kinds of processing in addition to the address of the transfer origin. The transaction 142a may have a plurality of outputs. An output of the transaction 142a includes scripts related to various kinds of processing in addition to the address of the transfer destination. A public key is provided with a secret key and is open to the public via the P2P network 10. In addition, an address is provided with a public key and is used for identifying the transfer origin and the transfer destination of tokens. A secret key is information kept secret from a third person by a proprietor of tokens.

An input of the transaction 142a corresponds to a UTXO stored in the UTXO pool 143. An output of the transaction 142a includes the quantity of tokens transferred to the address of the transfer destination. The quantity of transferred tokens in an output of the transaction 142a cannot exceed the quantity of UTXOs indicated by the input of the transaction 142a. The transaction 142a can include a plurality of outputs within a range of the quantity of UTXOs indicated by the input. The signature data and the public key in the transaction 142a are used for authentication of a transaction by a miner. The miner decrypts the signature data with the public key, authenticates, on the basis of this, that this transaction 142a is performed by the proprietor of tokens indicated by the address of this input, and stores the block for the authenticated transaction 142a in the block chain 141.

Fig. 6 is a block diagram showing a structure of an UTXO stored in the UTXO pool 143 of the virtual currency storage unit 140. A UTXO 143a stored in the UTXO pool 143 includes the address of the proprietor of tokens and the holding quantity thereof. The UTXO 143a is referred to as an unspent transaction output and indicates tokens which have been designated as an output of the transaction 142a and have not been designated as an input thereafter.

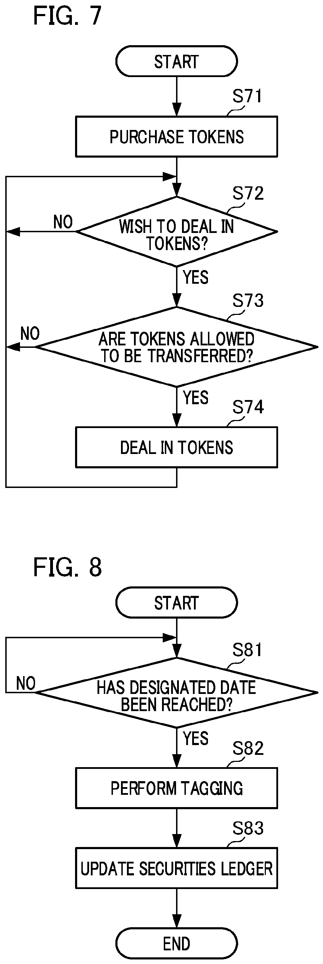

Figs. 7 and 8 are flowcharts showing operation of the virtual currency management system 100 shown in Fig. 1. When an ICO is launched, an issuer goes public with a white paper. The white paper discloses advantages, risks, and the like to investors in detail, such as details of a project which is a target of fund-raising, a platform, an upper limit and a lower limit for the quantity of tokens to be issued, benefits from purchase of tokens, a schedule of sales, a plan for a public offering, the name of an agency at the time of a public offering, and exemption clauses. This white paper is open to the public through the issuer terminal device 1 via the Internet or the like.

Investors refer to the white paper, and when they can be convinced, they participate in the virtual currency management system 100 via the P2P network 10. This participation is realized when an investor installs a program related to the virtual currency management system 100 in the investor terminal device 4 of himself/herself. The program related to the virtual currency management system 100 is also installed in the issuer terminal device 1. When tokens are subjected to a public offering, the program related to the virtual currency management system 100 is also installed in the exchange terminal device 2 serving as a terminal device of a token exchange mediating transactions thereof. In addition, the program related to the virtual currency management system 100 is also installed in the sales office terminal device 3 serving as a terminal device of a sales office itself dealing in tokens.

The virtual currency management system 100 of the present embodiment has a function of converting tokens purchased by investors into valuable securities. This is specified in the white paper. Accordingly, desirability of investment for investors can be increased. Valuable securities into which tokens are converted can include bonds, stocks, and the like. These bonds, stocks, and the like may be related to the company, the local government, or the like of an issuer itself or may be related to the company, the local government, or the like of a third person. A time of converting tokens into valuable securities may be a time when all tokens are converted into valuable securities on a designated date set in advance or may be a time when tokens are converted into valuable securities in response to a request from an investor after a designated date set in advance. Regarding a rate when tokens are converted into valuable securities, tokens may be converted at a rate set in advance at any time or may be converted at a rate set in accordance with the values of the tokens and valuable securities at the time when the investor has purchased the tokens or may be converted at a rate set in accordance with the value of the tokens and valuable securities at the time of conversion. In the present embodiment, tokens are converted into valuable securities, but the present invention is not limited thereto and tokens may be converted into cash, electronic money, or other virtual currencies.

In Step S71 of Fig. 7, an investor refers to a white paper and purchases tokens. At this time, in the investor terminal device 4 of this investor, the investor transmits his/her intention of purchasing tokens to the issuer terminal device 1 via the P2P network 10 and makes payment. Payment can be made with a virtual currency such as Bitcoin, Ethereum, or XEM or may be made with other currencies. When the purchase of tokens in the investor terminal device 4 is approved by the issuer terminal device 1, the approval is released in the P2P network 10 by the issuer terminal device 1. In the terminal device 11 connected to the P2P network 10, the block 141a for coin-based transactions related to the sold tokens is stored in the block chain 141 of the storage unit 14, and the UTXO 143a related to the sold tokens is stored in the UTXO pool 143 of the storage unit 14.

Processing of Fig. 7 and processing of Fig. 8 are executed in parallel with each other after tokens are issued by the issuer. In Step S81 of Fig. 8, it is determined whether a designated date set in advance has been reached, and if the designated date has not been reached, the loop in Step S81 is repeated.

In Step S72 of Fig. 7, it is determined whether a proprietor of the tokens intends to deal in, that is, transact the tokens. Intending to transact tokens indicates releasing the transaction 142a in the P2P network 10. During transactions of the tokens, the terminal device 11 releases the transaction 142a having the structure shown in Fig. 5 in the P2P network 10. A terminal device, of other terminal devices connected to the P2P network 10, having a function of authenticating transactions stores this transaction 142a in the transaction pool 142 of itself and executes authentication. Through this authentication, the terminal device 11 confirms whether the UTXO 143a indicated by the current input of the transaction 142a is allowed to be transferred (Step S73 of Fig. 7). When the tokens are issued by the issuer, the UTXO 143a is allowed to be transferred. Thereafter, due to tagging in Step S82 of Fig. 8 (which will be described below), the UTXO 143a is not allowed to be transferred.

In Step S73 of Fig. 7, if the UTXO 143a is allowed to be transferred, a terminal device authenticating the transactions thereof executes dealing in the tokens by authenticating the transaction, finding out the nonce of the block 141b which is a block for the transactions thereof, then storing the block 141b in the block chain 141, deleting the UTXO 143a of the transfer origin in the UTXO pool 143, and storing the UTXO 143a of the transfer destination (Step S74 of Fig. 7).

In Step S81 of Fig. 8, when the designated date set in advance has been reached (when the designated date has passed), the terminal device 11 performs tagging with respect to all the UTXOs 143a in the UTXO pool 143 (Step S82 of Fig. 8). This tagging prohibits transfer of the tokens. After tagging is performed, it is determined in Step S73 of Fig. 7 that transfer is not allowed, and dealing in the tokens cannot be performed thereafter. In the present embodiment, the tokens are thereby converted into valuable securities. According to the processing described above, irrespective of whether tokens are kept in a hot wallet or tokens are kept in a cold wallet, the tokens can be prevented from being dealt after they are converted into valuable securities.

In Step S83 subsequent to Step S82 of Fig. 8, the securities ledger 146 is updated. An account number is associated in advance with the address indicated by the UTXO 143a at the time when tokens are converted into valuable securities, and this account number is stored in the securities ledger 146. Thus, the valuable securities can be delivered to the proprietor of tokens. That is, the issuer terminal device 1 deposits valuable securities having a value set in advance in an account having the account number stored in the securities ledger 146.

### [Second embodiment]

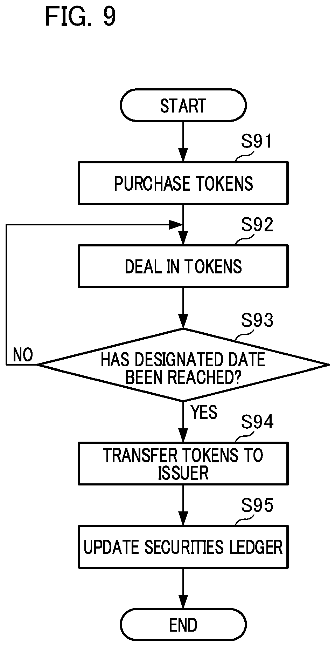

Fig. 9 is a flowchart showing operation of the virtual currency management system 100 according to a second embodiment of the present invention. Since the configurations in the present embodiment are the same as those of the virtual currency management system 100 shown in Fig. 1, description will be given with reference to Figs. 1 to 6. In the first embodiment, a miner does not authenticate a transaction when it is not a transaction by a proprietor of the secret key to the signature data. However, in the present embodiment, a special case is provided for tokens of an ICO so that a miner authenticates transactions by an issuer of tokens.

In Step S91 of Fig. 9, an investor refers to a white paper and purchases tokens. Thereafter, the proprietor of the tokens deals in the tokens by releasing transactions in the P2P network 10 of the virtual currency management system 100 (Step S92).

Thereafter, the issuer terminal device 1 determines whether a designated date set in advance has been reached (Step S93), and if the designated date has not been reached, the loop in Steps S92 and S93 is repeated. In Step S93, when the designated date set in advance has been reached (when the designated date has passed), the issuer terminal device 1 releases a transaction, in which all the tokens are transferred to the issuer, in the P2P network 10 (Step S94). The miner authenticates this transaction, and the proprietor of tokens until that time can no longer deal in the tokens. In the present embodiment, the tokens are thereby converted into valuable securities. According to the processing described above, after tokens are converted into valuable securities, the proprietor of tokens becomes the issuer. Therefore, even when tokens are kept in a hot wallet or tokens are kept in a cold wallet, the tokens can be prevented from being dealt.

In Step S95 subsequent to Step S94 of Fig. 9, the securities ledger 146 is updated. An account number is associated in advance with the address indicated by the UTXO 143a at the time when tokens are converted into valuable securities, and this account number is stored in the securities ledger 146. Thus, the valuable securities can be delivered to the proprietor of tokens. That is, the issuer terminal device 1 deposits valuable securities having a value set in advance in an account having the account number stored in the securities ledger 146.

Since tokens are converted into valuable securities, processing of preventing dealing thereafter may be described with scripts in the output of the transaction 142a, for example.
(1) The present invention provides a virtual currency management method for managing a virtual currency using a distributed ledger technology in which transactions of the virtual currency are managed using a plurality of terminal devices (for example, the issuer terminal device 1, the exchange terminal device 2, the sales office terminal device 3, the investor terminal device 4, and the terminal device 11) in a distributed manner. The virtual currency management method includes a virtual currency issuing step of issuing the virtual currency (for example, Step S71), a virtual currency transacting step of transacting the virtual currency issued in the virtual currency issuing step (for example, Steps S71 and S74, provision and authentication of transactions), a transaction storing step of causing the plurality of terminal devices to store the transactions of the virtual currency in the virtual currency transacting step (for example, Steps S71 and S74, storing transactions in the block chain and the UTXO pool), and a conversion executing step of executing conversion from the virtual currency to valuable securities (for example, Steps S82 and S83 and Steps S94 and S95). Accordingly, desirability of investment for investors can be increased. For example, when a business or a project, which is the target of an ICO and has seemed to be successful at the beginning, seems to have a tame ending, tokens can be converted into valuable securities as an option other than selling the tokens, thereby increasing desirability of investment.
(2) In addition, according to the present invention, the conversion executing step includes a non-transferable tagging step of tagging the virtual currency which has been converted into valuable securities with a condition for being non-transferable (for example, Step S82). Accordingly, transfer of, that is, dealing in tokens after conversion into valuable securities can be prevented.
(3) In addition, according to the present invention, the conversion executing step includes a proprietary right transferring step of transferring a proprietary right of the virtual currency which has been converted into valuable securities to an issuer (for example, Step S94). Accordingly, transfer of, that is, dealing in tokens after conversion into valuable securities can be prevented except for the issuer.
(4) In addition, according to the present invention, in the conversion executing step, conversion from the virtual currency to valuable securities is executed due to the fact that a designated date set in advance has passed (for example, S81 and S93). Accordingly, it is possible to provide a period of time of waiting for a rise in price of tokens until the designated date, and thus desirability of investment can be further increased.
(5) In addition, according to the present invention, in the conversion executing step, when there is a request from a proprietor of the virtual currency, conversion from the virtual currency to valuable securities is executed. Accordingly, an investor has more options available, and thus desirability of investment can be further increased.
(6) In addition, according to the present invention, in the conversion executing step, valuable securities having a value set in advance are deposited in an account of the proprietor of the virtual currency which has been converted into valuable securities (for example, S83 and S95). Accordingly, an investor can secure valuable securities having a value set in advance, and thus desirability of investment can be further increased.
(7) In addition, according to the present invention, in the conversion executing step, valuable securities having a value based on a rate set at a time when the virtual currency is issued in the virtual currency issuing step are deposited in the account of the proprietor of the virtual currency which has been converted into valuable securities (for example, S83 and S95). Accordingly, an investor can secure valuable securities having a value at the time when the virtual currency is issued, and thus desirability of investment can be further increased.
(8) In addition, according to the present invention, in the conversion executing step, valuable securities having a value based on a rate set at a time when the virtual currency is converted into valuable securities are deposited in the account of the proprietor of the virtual currency which has been converted into valuable securities. Accordingly, when there is a rise in price after tokens are issued, an investor can obtain valuable securities having a value thereof, and thus desirability of investment can be further increased.
(9) In addition, the present invention provides a virtual currency management program for managing a virtual currency using a distributed ledger technology in which transactions of the virtual currency are managed using a plurality of terminal devices (for example, the issuer terminal device 1, the exchange terminal device 2, the sales office terminal device 3, the investor terminal device 4, and the terminal device 11) in a distributed manner. The virtual currency management program causes computers (for example, the issuer terminal device 1, the exchange terminal device 2, the sales office terminal device 3, the investor terminal device 4, and the terminal device 11) to function as virtual currency issuing means for issuing the virtual currency (for example, Step S71), virtual currency transacting means for transacting the virtual currency issued by the virtual currency issuing means (for example, Steps S71 and S74, provision and authentication of transactions), transaction storing means for causing the plurality of terminal devices to store the transactions of the virtual currency by the virtual currency transacting means (for example, Steps S71 and S74, storing transactions in the block chain and the UTXO pool), and conversion executing means for executing conversion from the virtual currency to valuable securities (for example, Steps S82 and S83 and Steps S94 and S95). Accordingly, desirability of investment for investors can be increased. For example, when a business or a project, which is the target of an ICO and has seemed to be successful at the beginning, seems to have a tame ending, tokens can be converted into valuable securities as an option other than selling the tokens, thereby increasing desirability of investment.

Hereinabove, preferable embodiments of the present invention have been described. However, the present invention is not limited to these embodiments, and various deformations and changes can be made within a range of the gist thereof. These embodiments and deformations thereof are included in the scope and the gist of the invention and are simultaneously included in the invention disclosed in the claims and the range equivalent thereto.

Priority is claimed on Japanese Patent Application No. 2018-75225, filed April 10, 2018, the content of which is incorporated herein by reference.

### [Reference Signs List]

- 1: Issuer terminal device
- 2: Exchange terminal device
- 3: Sales office terminal device
- 4: Investor terminal device
- 10 P2P: network
- 11: Terminal device
- 12: Processing unit
- 13: Input/output unit
- 14: Storage unit
- 15: Communication unit

## Claims

1. A virtual currency management method for managing a virtual currency using a distributed ledger technology in which transactions of the virtual currency are managed using a plurality of terminal devices in a distributed manner, the virtual currency management method comprising:
a virtual currency issuing step of issuing the virtual currency;
a virtual currency transacting step of transacting the virtual currency issued in the virtual currency issuing step;
a transaction storing step of causing the plurality of terminal devices to store the transactions of the virtual currency in the virtual currency transacting step; and
a conversion executing step of executing conversion from the virtual currency to valuable securities.

2. The virtual currency management method according to claim 1,
wherein the conversion executing step includes a non-transferable tagging step of tagging the virtual currency which has been converted into valuable securities with a condition for being non-transferable.

3. The virtual currency management method according to claim 1,
wherein the conversion executing step includes a proprietary right transferring step of transferring a proprietary right of the virtual currency which has been converted into valuable securities to an issuer.

4. The virtual currency management method according to any one of claims 1 to 3,
wherein in the conversion executing step, conversion from the virtual currency to valuable securities is executed due to the fact that a designated date set in advance has passed.

5. The virtual currency management method according to any one of claims 1 to 3,
wherein in the conversion executing step, when there is a request from a proprietor of the virtual currency, conversion from the virtual currency to valuable securities is executed.

6. The virtual currency management method according to any one of claims 1 to 5,
wherein in the conversion executing step, valuable securities having a value set in advance are deposited in an account of the proprietor of the virtual currency which has been converted into valuable securities.

7. The virtual currency management method according to claim 6,
wherein in the conversion executing step, valuable securities having a value based on a rate set at a time when the virtual currency is issued in the virtual currency issuing step are deposited in the account of the proprietor of the virtual currency which has been converted into valuable securities.

8. The virtual currency management method according to claim 6,
wherein in the conversion executing step, valuable securities having a value based on a rate set at a time when the virtual currency is converted into valuable securities are deposited in the account of the proprietor of the virtual currency which has been converted into valuable securities.

9. A virtual currency management program for managing a virtual currency using a distributed ledger technology in which transactions of the virtual currency are managed using a plurality of terminal devices in a distributed manner, the virtual currency management program causing computers to function as
virtual currency issuing means for issuing the virtual currency,
virtual currency transacting means for transacting the virtual currency issued by the virtual currency issuing means,
transaction storing means for causing the plurality of terminal devices to store the transactions of the virtual currency by the virtual currency transacting means, and
conversion executing means for executing conversion from the virtual currency to valuable securities.
